## Europäisches Patentamt

## European Patent Office

## Office européen des brevets

(19)

(11) Publication number: **0 105 373**
**B1**

(12) # EUROPEAN PATENT SPECIFICATION

(45) Date of publication of patent specification: **25.03.87**

(51) Int. Cl.⁴: **F 16 H 57/04,** G 05 G 3/00

(21) Application number: **82903187.1**

(22) Date of filing: **29.10.82**

(86) International application number:
**PCT/JP82/00423**

(87) International publication number:
**WO 83/01667 11.05.83 Gazette 83/11**

(54) **OIL SUPPLYING DEVICE FOR SHIFT FORK OF TRANSMISSION.**

(30) Priority: **29.10.81 JP 173203/81**

(43) Date of publication of application:
**18.04.84 Bulletin 84/16**

(45) Publication of the grant of the patent:
**25.03.87 Bulletin 87/13**

(84) Designated Contracting States:
**DE FR**

(56) References cited:
**FR-A-2 027 014**
**FR-A-2 259 280**
**FR-A-2 448 665**
**JP-Y-47 024 842**
**JP-Y-54 022 841**

**PATENTS ABSTRACTS OF JAPAN, vol. 4, no.**
**120 (M-28)602r, 26th August 1980**

(73) Proprietor: **HONDA GIKEN KOGYO KABUSHIKI KAISHA**
**27-8, Jingumae, 6-chome**
**Shibuya-ku, Tokyo 150 (JP)**

(72) Inventor: **ITOH, Kazuhito**
**2-8-6, Sakurashinmachi**
**Setagaya-ku Tokyo 154 (JP)**
Inventor: **KONDO, Makoto**
**2551-12, Toyotahon Kawagoe-shi**
**Saitama-ken 350 (JP)**

(74) Representative: **Melzer, Wolfgang, Dipl.-Ing. et al**
**Patentanwälte Dipl.-Ing. H. Mitscherlich Dipl.-Ing. K. Gunschmann Dipl.-Ing. Dr.rer.nat. W. Körber Dipl.-Ing. J. Schmidt-Evers Dipl.-Ing. W. Melzer Steinsdorfstrasse 10**
**D-8000 München 22 (DE)**

EP 0 105 373 B1

## Description

The present invention relates to shift fork lubricating system in a transmission of the type in which shift forks have their bearing portions slidably fitted and supported on a tubular shift fork shaft having lubricating oil ports opened in the outer circumference and their forked pawl portions formed at their leading ends for engagement with circumferential grooves of shift gears so that said shift gears are shifted by the sliding controls of said shift forks.

A transmission of the above type is described in JP—Y2—47—24 842 and comprises a lubricating device therefore including a hollow guide bar fixedly disposed in the transmission case and shift forks having boss portions, respectively, which are adapted to slide on the guide bar in axial direction. For lubrication, lubricating oil delivered to the interior of the hollow guide bar from an oil pump flows through four oil holes on the wall of the guide bar as well as through two oil holes and two cut-outs on the shift forks, located in vertical alignment with said oil holes, and then the oil drips onto a number of engaged teeth of transmission gears.

In a transmission of a vehicular engine or the like, generally speaking, shift forks borne on a shift fork shaft in a manner to slide axially thereof are desired partly to supply a sufficient amount of lubricating oil between the forked pawl portions formed at the leading ends thereof and shift gears engaging with the pawl portions irrespective of the positions of shift forks on the shift fork shaft thereby to ensure smooth rotations of the shift gears, partly to supply a sufficient amount of lubricating oil between the shift fork shaft and the bearing portions of the shift forks thereby to ensure smooth and light sliding motions of the shift forks to the right or left, and partly to accurately move in parallel on the shift fork shaft at all times, whereby the operations of the transmission and the gear changing operations may always be conducted properly and efficiently as a whole.

However, above JP—Y2—47—24 842 shows us arrangement for lubricating the sliding area at which the boss portions of the shift forks are slidably mounted on the guide bar. Furthermore, there is a fear of interrupting communication between the oil holes on the guide bar and the oil holes and the cut-outs on the shift forks, particularly during sliding movements of shift fork on the guide bar by their shifting operation. Thus, it is not possible to feed lubricant to any required position at all times irrespective of the shift position of the shift forks.

It is a major object of the present invention to provide a shift fork lubricating system for use in a transmission, which is enabled to satisfy the aforementioned desires although it has a simple construction.

In order to achieve the aforementioned object, according to the present invention, said transmission comprises a shift fork lubricating system which is characterized in that the bearing portion of at least one of said shift forks has its inner circumference formed at its center area with an annular oil groove which is axially elongated and is always in communication with an oil port opened into said tubular shift fork shaft; that said shift fork has its inner circumference formed at both the sides of said annular oil groove with pairs of sliding faces, which havs a substantially equal axial length and which are made slidable on said tubular shift fork shaft; and that said shift fork is formed therein with an oil passage which is opened to the end face of the forked pawl portion thereof at a location offset toward the side which is rotationally entered by said shift gear, said oil passage having a communication with said annular oil groove.

According to such a construction the shift forks can always be controlled to accurately slide in parallel on the tubular shift fork shaft, while being prevented from falling in the sliding direction, so that the sliding controls of the shift forks to the right or left can always be performed properly, smoothly and lightly.

Further, the sliding faces formed on the bearing portions of the shift forks are made to have a substantially equal length in the axial direction so that they can be uniformly bored by a turning or the like operation.

Still further, since the shift forks are provided therein with oil passages which are opened into the forked pawl portions thereof and which are communicated with the annular oil grooves, lubricating oil can be supplied through the oil ports, the annular oil grooves and the oil passages to the engagement portions between the forked pawl portions and the shift gears, no matter where the shift fork may be shifted, so that the shift forks can have their sliding faces effectively lubricated.

Furthermore, if the aforementioned forked pawl portion is formed with a notched groove communicating with said oil passage and opening to the end face and to both side surfaces of said forked pawl portion, the lubricating oil flows through the oil passage to the notched groove, from which the oil is then supplied simultaneously to the bottom faces of the circumferential grooves and both side surfaces of the shift gears so that it can promptly lubricate all the areas of the circumferential grooves thereby to further enhance the lubricating effects between the forked pawl portions of the shift forks and the shift gears, whereby the rotations and shifts of the shift gears can be performed smoothly and lightly.

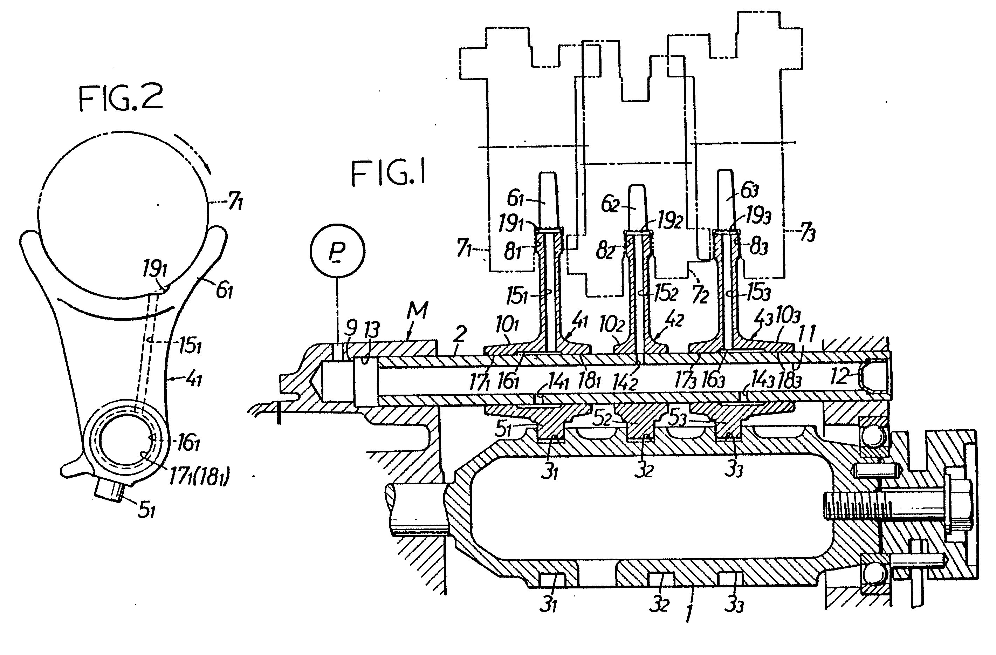

In the accompanying drawing showing one embodiment of the present invention: Fig. 1 is a longitudinal section thereof; and Fig. 2 is a side elevation of a first shift fork.

One embodiment of the present invention will be described in the following with reference to the accompanying drawing.

In a transmission casing M of an engine, there is rotatably journaled a shift drum 1 of a drum type reduction gear mechanism. In the casing M, moreover, there is supported a shift fork shaft 2 which is adjacent to the shift drum 1. The shift fork shaft 2 is made axially movable in a predetermined stroke until it abuts against the bearing hole step portion 9 of the transmission casing M.

The aforementioned shift drum 1 has its outer circumference formed with a plurality of, e.g., first to third lead grooves $3_1$, $3_2$ and $3_3$ which are longitudinally spaced from one another. On the aforementioned shift fork shaft 2, there are fitted bearing portions $10_1$, $10_2$ and $10_3$ of first to third shift forks $4_1$, $4_2$ and $4_3$ which correspond to the aforementioned first to third lead grooves $3_1$, $3_2$ and $3_3$ and of which the first and third shift forks $4_1$ and $4_3$ are made axially slidable on the shift fork shaft 2 whereas the second shift fork $4_2$ is so fixed to the shift fork shaft 2 that it can axially move integrally with said shaft 2.

From the bearing portions $10_1$, $10_2$ and $10_3$ of the first to third shift forks $4_1$, $4_2$ and $4_3$, respectively, there are integrally projected three guide pins $5_1$, $5_2$ and $5_3$ which engage with the aforementioned first to third lead grooves $3_1$, $3_2$ and $3_3$. The first to third shift forks $4_1$, $4_2$ and $4_3$ have their forked pawl portions $6_1$, $6_2$ and $6_3$ engaged with the circumferential grooves $8_1$, $8_2$ and $8_3$ of shift gears $7_1$, $7_2$ and $7_3$, respectively, which belong to a reduction gear mechanism mounted in the transmission casing M. When the shift drum 1 is rotated, as usual, intermittently by a predetermined shift angle, the first and third shift forks $4_1$ and $4_3$ are controlled to slide on the shift fork shaft 2 by the actions of the first to third lead grooves $3_1$, $3_2$ and $3_3$ of the shift drum 1, whereas only the second shift fork $4_2$ is controlled to move to the right and left together with the shift fork shaft 2, whereby the reduction gear mechanism can be shifted in plural steps.

The aforementioned shift fork shaft 2 is formed with a main oil passage 11, which has its open end (as viewed at the righthand side of Fig. 1) closed by a blind member 12 and its other open end (as viewed at the lefthand side of Fig. 1) communicating with an oil pump P by way of an oil passage 13 formed in the transmission casing M.

The aforementioned main oil passage 11 is opened into the outer circumference of the shift fork shaft 2 by way of oil ports $14_1$, $14_2$ and $14_3$ which are formed in that shaft 2. On the other hand, the aforementioned first to third shift forks $4_1$, $4_2$ and $4_3$ are formed therein with longitudinally extending oil passages $15_1$, $15_2$ and $15_3$, which have their respective one-side ends opened in the inner circumferences of the bearing portions $10_1$, $10_2$ and $10_3$ of the first to third shift forks $4_1$, $4_2$ and $4_3$ and their respective other-side ends opened in the arcuate end faces of the forked pawl portions $6_1$, $6_2$ and $6_3$ of the first to third shift forks $4_1$, $4_2$ and $4_3$.

The bearing portions $10_1$ and $10_3$ of the first and third shift forks $4_1$ and $4_3$ have their inner circumferences formed at their center areas with axially elongated annular oil grooves $16_1$ and $16_3$ and at both their sides with left and right sliding faces $17_1$ and $18_1$, and $17_3$ and $18_3$ which have a substantially equal length and which are made slidable on the outer circumference of the shift fork shaft 2.

The oil passages $15_1$ and $15_3$ of the first and third shift forks $4_1$ and $4_3$ are made to communicate with the main oil passage 11 by way of the aforementioned annular oil grooves $16_1$ and $16_3$ and the aforementioned oil ports $14_1$ and $14_3$, respectively. These communications are not blocked even if the first and third shift forks $4_1$ and $4_3$ are slid to the right and left on the shift fork shaft 2 for the gear changing operations.

On the other hand, the oil passage $15_2$ of the second shift fork $4_2$ secured to the shift fork shaft 2 is made to communicate with the main oil passage 11 by way of only the aforementioned oil port $14_2$.

As better seen from Fig. 2, the forked pawl portions $6_1$, $6_2$ and $6_3$ of the first to third shift forks $4_1$, $4_2$ and $4_3$ are formed with arcuate notched grooves $19_1$, $19_2$ and $19_3$ which are opened over their arcuate end faces and two side surfaces and which are made to communicate with the aforementioned oil passages $15_1$, $15_2$ and $15_3$.

Moreover, the notched grooves $19_1$, $19_2$ and $19_3$ communicating with the aforementioned oil passages $15_1$, $15_2$ and $15_3$ are eccentrically opened at the rotationally entering sides of the shift gears $7_1$, $7_2$ and $7_3$, i.e., the sides which are rotationally (in the direction of arrow of Fig. 2) entered by the shift gears $7_1$, $7_2$ and $7_3$ relative to the first to third shift forks $4_1$, $4_2$ and $4_3$, so that the lubricating oil may be easily introduced from the oil passages $15_1$, $15_2$ and $15_3$ to the engaging and sliding portions between the arcuate end faces of the forked pawl portions $6_1$, $6_2$ and $6_3$ and the circumferential grooves $8_1$, $8_2$ and $8_3$ of the shift gears $7_1$, $7_2$ and $7_3$ by making use of the rotations of the shift gears $7_1$, $7_2$ and $7_3$.

The operation of the embodiment of the present invention shown in Figs. 1 and 2 will be described in the following.

Now, when the oil pump P is driven by the run of the engine, the lubricating oil under pressure is supplied from the oil passage 13 to the main oil passage 11, from which it is further supplied via the oil ports $14_1$, $14_2$ and $14_3$ and the oil passages $15_1$, $15_2$ and $15_3$ thereby to forcibly lubricate the sliding faces of the forked pawl portions $6_1$, $6_2$ and $6_3$ and the shift gears $7_1$, $7_2$ and $7_3$. Since, in this case, the notched grooves $19_1$, $19_2$ and $19_3$ communicating with the open ends of the oil passages $15_1$, $15_2$ and $15_3$ on the side of the forked pawl portions $6_1$, $6_2$ and $6_3$ are positioned at the aforementioned sides which are entered by the shift gears $7_1$, $7_2$ and $7_3$, the lubricating oil can be efficiently introduced into the clearances between the circumferential grooves $8_1$, $8_2$ and $8_3$ and the forked pawl portions $6_1$, $6_2$ and $6_3$ by making use of the rotations of the shift gears $7_1$, $7_2$ and $7_3$.

Thus, if the shift drum 1 is turned by a gear changing operation, the first and third shift forks $4_1$ and $4_3$ are slid to the right or left on the shift fork shaft 2, while being guided by the first and third lead grooves $3_1$ and $3_3$, to shift the shift gears $7_1$ and $7_3$ to the right or left. Then, the lubricating oil in the main oil passage 11 is supplied from the oil ports $14_1$ and $14_3$ via the annular oil grooves $16_1$ and $16_3$ to the clearances between left and right sliding faces $17_1$ and $18_1$, and $17_3$ and $18_3$ of the bearing portions $10_1$ and $10_3$ and the outer circumference of the shift fork shaft 2 thereby to smoothly shift the first and third shift forks $4_1$ and $4_3$. By the aforementioned long annular oil grooves $16_1$ and $16_3$, moreover, the main oil passage 11 and the oil passages $15_1$ and $15_3$ are always held in their communicating states so that the lubricating oil is supplied without any difficulty to the clearances between the sliding faces of the forked pawl portions $6_1$ and $6_3$ and the shift gears $7_1$ and $7_3$. Still moreover, those left and right sliding faces $17_1$ and $18_1$, and $17_3$ and $18_3$ of the bearing portions $10_1$ and $10_3$, which have a substantially equal axial length, are associated with the shift fork shaft 2 to accurately move the first and third shift forks $4_1$ and $4_3$ in parallel while preventing them from falling down in the sliding direction.

Incidentally, since only the second shift fork $4_2$ is moved to the right and left together with the shift fork shaft 2 while being guided by the second lead grooves $3_2$, the lubricating oil is supplied without any difficulty to the clearances between the sliding faces of the forked pawl portions $6_2$ and the shift gear $7_2$.

## Claims

1. In a transmission of the type in which shift forks ($4_1$; $4_3$) have their bearing portions ($10_1$; $10_3$) slidably fitted and supported on a tubular shift fork shaft (2) having lubricating oil ports ($14_1$; $14_3$) opened in the outer circumference and their forked pawl portions ($6_1$; $6_3$) formed at their leading ends for engagement with circumferential grooves ($8_1$; $8_3$) of shift gears ($7_1$; $7_3$) so that said shift gears ($7_1$; $7_3$) are shifted by the sliding controls of said shift forks ($4_1$; $4_3$), a shift fork lubricating system which is characterized in that the bearing portion ($10_1$; $10_3$) of at least one of said shift forks ($4_1$; $4_3$) has its inner circumference formed at its center area with an annular oil groove ($16_1$; $16_3$) which is axially elongated and is always in communication with an oil port ($14_1$; $14_3$) opened into said tubular shift fork shaft (2); that said shift fork ($4_1$; $4_3$) has its inner circumference formed at both the sides of said annular oil groove ($16_1$; $16_3$) with pairs of sliding faces ($17_1$, $18_1$; $17_3$, $18_3$), which have a substantially equal axial length and which are made slidable on said tubular shift fork shaft (2); and that said shift fork ($4_1$; $4_3$) is formed therein with an oil passage ($15_1$; $15_3$) which is opened to the end face of the forked pawl portion ($6_1$; $6_3$) thereof at a location offset toward the slide which is rotationally entered by said shift gear ($7_1$; $7_3$), said oil passage having a communication with said annular oil groove ($16_1$; $16_3$).

2. A shift fork lubricating system as set forth in claim 1, further characterized in that said forked pawl portion ($6_1$; $6_3$) is formed with a notched groove ($19_1$; $19_3$) communicating with said oil passage ($15_1$; $15_3$) and opening to the end face and to both side surfaces of said forked pawl portion ($6_1$; $6_3$).

## Patentansprüche

1. In einem Getriebe, bei dem Lagerabschnitte ($10_1$; $10_3$) von Schaltgabeln ($4_1$; $4_3$) auf einer rohrförmigen Schaltgabelwelle (2) verschiebbar angeordnet und gehaltert sind, die zum Außenumfang sich öffnende Schmierölöffnungen ($14_1$; $14_2$) aufweist, une bei dem deren gegabelte Klauenabschnitte ($6_1$; $6_3$), die an den Vorderenden zum Eingriff mit Umfangsnuten ($8_1$; $8_3$) von Gangschalträdern ($7_1$; $7_3$) ausgebildet sind um die Gangschalträder ($7_1$; $7_3$) durch Schiebe-Steuerungen der Schaltgabeln ($4_1$; $4_3$) zu verschieben, eine Schaltgabel-Ölverteilungsvorrichtung, die dadurch gekennzeichnet ist, daß bei dem Lagerabschnitt ($10_1$; $10_3$) mindestens einer Schaltgabel ($4_1$; $4_3$) der Innenumfang im mittleren Bereich eine ringförmige Ölnut ($16_1$; $16_3$) aufweisend ausgebildet ist, die axial verlängert ist und die stets mit einer Schmierölöffnung ($14_1$; $14_3$) in Verbindung steht, die sich in die rohrförmige Schaltgabelwelle (2) öffnet; dab bei der Schaltgabel ($4_1$; $4_3$) der Innenumfang beiderseits der ringförmigen Ölnut ($16_1$; $16_3$) mit paarweisen Schiebeflächen ($17_1$, $18_1$; $17_3$, $18_3$) versehen ist, die eine im wesentlichen gleiche axiale Länge besitzen und die auf der rohrförmigen Schaltgabelwelle (2) verschieblich sind; und daß die Schaltgabel ($4_1$; $4_3$) im Inneren einen Ölkanal ($15_1$; $15_3$) aufweist, der sich in die Endfläche deren gegabelten Klauenabschnitts ($6_1$; $6_3$) an einer Stelle öffnet, die zu der Seite versetzt ist, an der das Gangschaltrad ($7_1$; $7_3$) drehend eintritt, wobei der Ölkanal ($15_1$; $15_3$) mit der ringförmigen Ölnut ($16_1$; $16_3$) in Verbindung steht.

2. Schaltgabel-Ölverteilungsvorrichtung nach Anspruch 1, dadurch gekennzeichnet, daß der gegabelte Klauenabschnitt ($6_1$; $6_3$) mih einer Kerbnut ($19_1$; $19_3$) versehen ist, die mit dem Ölkanal ($15_1$; $15_3$) in Verbindung steht und die sich zur Endfläche und zu beiden Seitenflächen des gegabelten Klauenabschnitts ($6_1$; $6_3$) öffnet.

## Revendications

1. Dans une transmission du type dans lequel des fourchettes de commande des vitesses ($4_1$; $4_3$) ont leurs parties de support ($10_1$; $10_3$) montées et supportées de manière coulissante sur un arbre tubulaire de fourchette de commande des vitesses (2) présentant des trous de passages d'huile lubrifiante ($14_1$; $14_3$) ouverts dans la circonférence extérieure et leurs parties à cliquet en fourche ($6_1$; $6_3$) formées au niveau de leurs extrémités de tête pour s'engager avec des rainures circonférentielles ($8_1$; $8_3$) d'engrenages de vitesse ($7_1$; $7_3$) de manière à ce que lesdits engrenages de

vitesse ($7_1$; $7_3$) soient déplacés par les commandes de glissement desdites fourchettes de commande des vitesses ($4_1$; $4_3$),

un système de lubrification pour la fourchette de commande des vitesses qui est caractérisé en ce que la partie de support ($10_1$; $10_3$) d'au moins une desdites fourchettes de commande des vitesses ($4_1$; $4_3$) a sa circonférence intérieure formée en son centre d'une rainure de graissage annulaire ($16_1$; $16_3$) qui est allongée axialement et est toujours en communication avec un trou de passage d'huile ($14_1$; $14_3$) ouvert dans ledit arbre tubulaire de fourchette de commande des vitesses ($2$); en ce que ladite fourchette de commande des vitesses ($4_1$; $4_3$) a sa circonférence intérieure formée des deux côtés de ladite rainure de graissage annulaire ($16_1$; $16_3$) avec des paires de surfaces de glissement ($17_1$, $18_1$; $17_3$, $18_3$) qui ont une longueur axiale sensiblement égale et qui peuvent glisser sur ledit arbre de fourchette de commande des vitesses ($2$);

et en ce que ladite fourchette de commande des vitesses ($4_1$; $4_3$) possède en dedans un passage d'huile ($15_1$; $15_3$) qui est ouvert vers la surface terminale de la partie à cliquet en fourche ($6_1$; $6_3$) de celle-ci dans un emplacement décalé du côté par lequel entre de manière rotative ledit engrenage de vitesse ($7_1$; $7_3$), ledit passage d'huile ayant une communication avec ladite rainure de graissage annulaire ($16_1$; $16_3$).

2. Système de lubrification de la fourchette de commande des vitesses selon la revendication 1, caractérisé en outre en ce que ladite partie à cliquet en fourche ($6_1$; $6_3$) est formée d'une rainure entaillée ($19_1$; $19_3$) communiquant avec ledit passage d'huile ($15_1$; $15_3$) et s'ouvrant vers la surface terminale et les deux surfaces latérales de ladite partie à cliquet en fourche ($6_1$; $6_3$).

FIG.2

FIG.1

$7_1$

$19_1$

$6_1$

$15_1$

$4_1$

$16_1$

$17_1(18_1)$

$5_1$

P

$6_1$

$6_2$

$6_3$

$19_1$

$19_2$

$19_3$

$7_1$

$8_1$

$8_2$

$7_2$

$8_3$

$7_3$

$15_1$

$15_2$

$15_3$

9 13

M

2

$10_1$

$4_1$

$10_2$

$4_2$

$4_3$

$10_3$

11

$17_1$

$16_1$

$14_1$

$18_1$

$14_2$

$17_3$

$16_3$

$14_3$

$18_3$

12

$5_1$

$5_2$

$5_3$

$3_1$

$3_2$

$3_3$

$3_1$

$3_2$

1

$3_3$

0 105 373